# EUROPÄISCHE PATENTSCHRIFT

(11) **EP 2 882 172 B1**
(45) Veröffentlichungstag und Bekanntmachung des Hinweises auf die Patenterteilung: **22.02.2017**
(21) Anmeldenummer: 14190574.5
(22) Anmeldetag: 28.10.2014
(51) Int. Cl.: H04M 1/06, H04B 1/3888

(54) **Mobiltelefonhalteeinrichtung**
Mobile telephone holding device
Dispositif de support d'un téléphone portable

(30) Priorität: 04.12.2013 DE 102013018134
(43) Veröffentlichungstag der Anmeldung: 10.06.2015
(73) Patentinhaber: Peiker acustic GmbH & Co. KG, 61381 Friedrichsdorf (DE)
(72) Erfinder: Lachnitt, Jens, 36304 Alsfeld (DE)
(74) Vertreter: Otten, Roth, Dobler & Partner mbB Patentanwälte

(56) Entgegenhaltungen:
- EP-A1- 1 241 648
- WO-A1-01/74190
- US-A1- 2013 313 252

## Beschreibung

Die Erfindung betrifft eine Mobiltelefonhaltevorrichtung gemäß dem Oberbegriff des Anspruchs 1.

Aus der EP 2 125 434 B1 ist eine Mobiltelefonhaltevorrichtung bekannt, welche als Hohlkörper ein Oberteil mit einem Aufnahmeraum sowie einen Boden und eine Klemmeinrichtung umfasst, wobei ein Mobiltelefon auf dem Boden ablegbar ist und wobei der Hohlkörper wenigstens zwei gegenüberliegende Wände umfasst und an einer dem Boden gegenüberliegenden Seite eine Öffnung umfasst. Nachteilig an einer derartige Mobiltelefonhaltevorrichtung ist, dass diese nur für Mobiltelefone einer bestimmten Bauform verwendbar, so dass die Mobiltelefonhaltevorrichtung zur Nutzung eines in der Bauform anderen Mobiltelefons wenigstens teilweise ausgetauscht werden muss.

Aus der EP 1 241 648 A1 ist eine Mobiltelefonhaltevorrichtung bekannt, welche einen Hohlkörper, einen Boden und eine Klemmeinrichtung umfasst, wobei auf dem Boden ein Mobiltelefon ablegbar ist, wobei der Hohlkörper wenigstens zwei gegenüberliegende Wände umfasst und an einer dem Boden gegenüberliegenden Seite eine Öffnung umfasst, wobei die Mobiltelefonhaltevorrichtung einen Stab umfasst, wobei sich der Stab von der ersten Wand zu der zweiten Wand des Hohlkörpers erstreckt, wobei der Stab derart gelagert oder ausgebildet ist, dass dieser aus einer Freigabestellung, in welcher der Stab und der Boden einen ersten Abstand zueinander aufweisen, in eine Klemmstellung, in welcher der Stab und der Boden einen zweiten Abstand zueinander aufweisen, und umgekehrt verlagerbar ist, wobei der erste Abstand größer als der zweite Abstand ist, wobei die Klemmeinrichtung zwei Führungsmittel umfasst, wobei die Führungsmittel seitlich des Bodens und seitlich der Öffnung angeordnet sind, wobei der Stab oder der Boden von den Führungsmitteln geführt ist.

Weitere Mobiltelefonhaltevorrichtungen sind aus der WO 01/74190 A1 und der US2013/0313252 A1 bekannt.

Es ist Aufgabe der Erfindung das Display eines in der Halterung aufgenommenen Mobiltelefons durch die Halterung möglichst wenig zu überdecken bzw. die Ablesbarkeit des Displays des Mobiltelefons weitestgehend zu erhalten.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Die erfindungsgemäße Mobiltelefonhaltevorrichtung umfasst weiterhin einen Stab umfasst, wobei sich der Stab von der ersten Wand zu der zweiten Wand des Hohlkörpers erstreckt, wobei der Stab derart gelagert oder ausgebildet ist, dass dieser aus einer Freigabestellung, in welcher der Stab und der Boden einen ersten Abstand zueinander aufweisen, in eine Klemmstellung, in welcher der Stab und der Boden einen zweiten Abstand zueinander aufweisen, und umgekehrt verlagerbar ist, wobei der erste Abstand größer als der zweite Abstand ist. Durch eine derartige Anordnung von Stab und Boden in Bezug auf einen zwischen dem Stab und dem Boden ausgebildeten Aufnahmeraum für Mobiltelefone ist es möglich, Mobiltelefone unterschiedlicher Abmessungen in der Freigabestellung in den Aufnahmeraum zu schieben und in der Klemmstellung klemmend zwischen dem Stab und dem Boden zu fixieren. Bei einer an die typischen Mobiltelefonabmessungen angepassten Ausführung des Hohlkörpers, der Freigabestellung des Stabs bzw. des Bodens und der Klemmstellung des Stabs bzw. des Bodens ist die Mobiltelefonhaltevorrichtung somit für jedes im Bereich dieser Abmessungen ausgebildete Mobiltelefon geeignet.

Durch die Ausbildung des Bauteils der Mobiltelefonhaltervorrichtung, welches auf einem Display des als Smartphone ausgebildeten Mobiltelefons aufliegt, in Form eines Stabes wird das Display nur minimal verdeckt. Hierbei ist es vorgesehen, den Stab aus einem durchsichtigen oder transparenten Material auszubilden, derart, dass das Display des Mobiltelefons auch in einem Bereich ablesbar ist, welcher durch den Stab verdeckt ist, wenn das Mobiltelefon in der Mobiltelefonhaltevorrichtung geklemmt ist.

Weitere Einzelheiten der Erfindung werden in der Zeichnung anhand von schematisch dargestellten Ausführungsbeispielen beschreiben.

Hierbei zeigt:
- Figur 1:: eine erste Ausführungsvariante einer Mobiltelefonhaltevorrichtung mit durch schwenkbare Arme gebildeten Führungsmitteln in einer geschnittenen Teilansicht;
- Figur 2:: eine zweite Ausführungsvariante einer Mobiltelefonhaltevorrichtung mit linear durch verfahrbare Arme gebildeten Führungsmitteln;
- Figur 3:: eine dritte Ausführungsvariante einer Mobiltelefonhaltevorrichtung mit durch schenkbare Arme gebildeten Führungsmitteln in teilweise geschnittener Seitenansicht in einer Freigabestellung;
- Figur 4:: die dritte Ausführungsvariante in einer Klemmstellung;
- Figur 5:: eine vierte Ausführungsvariante einer Mobiltelefonhaltevorrichtung mit durch elastische Lager gebildeten Führungsmitteln in teilweise geschnittener Seitenansicht in einer Freigabestellung;
- Figur 6:: die vierte Ausführungsvariante einer Mobiltelefonhaltevorrichtung bei unvollständig eingelegtem Mobiltelefon;
- Figur 7:: die vierte Ausführungsvariante einer Mobiltelefonhaltevorrichtung bei vollständig eingelegtem Mobiltelefon;
- Figur 8:: eine fünfte Ausführungsvariante einer Mobiltelefonhaltevorrichtung mit durch eine elastisch verformbare Stange gebildeten Führungsmitteln in teilweise geschnittener Seitenansicht und
- Figur 9:: eine sechste Ausführungsvariante einer Mobiltelefonhaltevorrichtung mit einer Mulde und mit durch eine elastisch verformbare Stange gebildeten Führungsmitteln in teilweise geschnittener Seitenansicht.

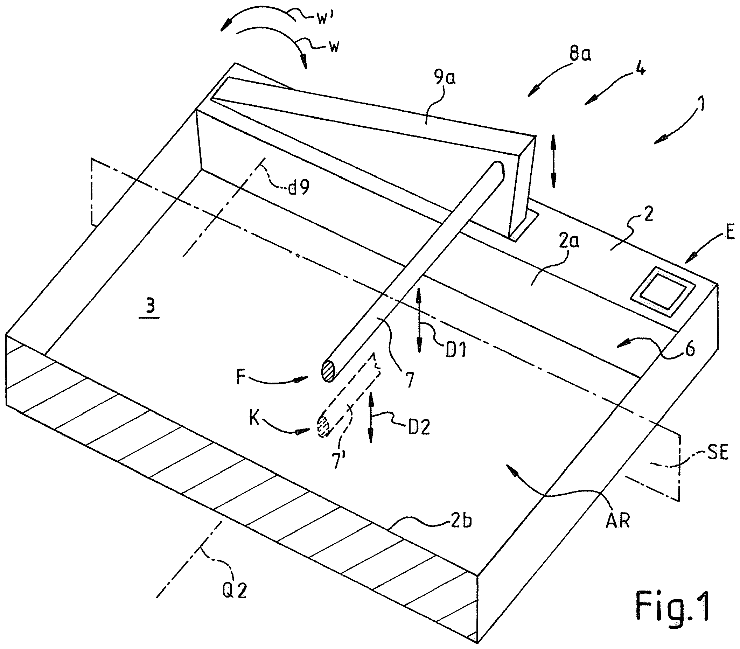

In der Figur 1 eine erste Ausführungsvariante einer Mobiltelefonhaltevorrichtung 1 mit durch schwenkbare Arme 9a gebildeten Führungsmitteln 8a in einer geschnittenen Teilansicht dargestellt. Hierbei ist der zweite schwenkbare Arm bzw. das zweite Führungsmittel einer Klemmeinrichtung 4 nicht dargestellt, aber bezogen auf eine Spiegelebene SE spiegelsymmetrisch zu dem ersten schwenkbaren Arm 9a bzw. dem ersten Führungsmittel 9a ausgebildet. Ein Hohlkörper 2 umfasst einen durch gegenüberliegenden Seitenwände 2a, 2b begrenzten Aufnahmeraum AR, in welchen ein quaderförmiges Mobiltelefon derart einlegbar ist, dass dieses mit seiner einem Display gegenüber liegenden Rückenfläche auf einem Boden 3 der Mobiltelefonhaltevorrichtung 1 ablegbar ist. Die Mobiltelefonhaltevorrichtung 1 umfasst weiterhin einen Stab 7, welcher zwischen den Armen 9a der Klemmeinrichtung 4 gehalten ist und in der Figur 1 von den Armen 9a in einer Freigabestellung F gehalten ist. In dieser Freigabestellung F weist der Stab 7 zu dem Boden 3 einen Abstand D1 auf. Der Abstand D1 ermöglicht ein schräges Einschieben des Mobiltelefons in den Aufnahmeraum. Sobald das Mobiltelefon mit seiner Rückenfläche vollflächig auf dem Boden aufliegt, können die Arme 9a um eine Drehachse d9 in Pfeilrichtung w derart verschenkt werden, dass sich der Stab 7 auf das nicht dargestellte Display des Mobiltelefons legt und dieses gegen den Boden 3 drückt. Hierdurch wird das Mobiltelefon verschiebesicher zwischen dem Stab 7 und dem Boden 3 gehalten, wobei die Führungsmittel 8a in einer Klemmstellung K, in welcher der Stab 7 das Mobiltelefon auf den Boden 3 drückt einrasten. Diese Arretierung der Klemmeinrichtung 4 kann durch eine Entriegelungseinrichtung E, von welcher nur eine Taste dargestellt ist, wieder gelöst werden, so dass sich die Arme 9a in eine Gegendrehrichtung w' wieder anheben und der Stab 7 von dem Display des Mobiltelefons abgehoben wird und wieder in die in der Figur 1 gezeigte Freigabestellung F zurückkehrt. Die Klemmstellung K ist in der Figur 1 durch eine gestrichelte Darstellung eines Abschnitts des Stabs 7 als Stab 7' schematisch angedeutet. Der Stab 7 verläuft parallel zu einer Querachse Q2 des Bodens 3. Das Mobiltelefon ist durch eine dem Boden 3 gegenüberliegende Öffnung 6 in den Aufnahmeraum AR ein- und ausschiebbar.

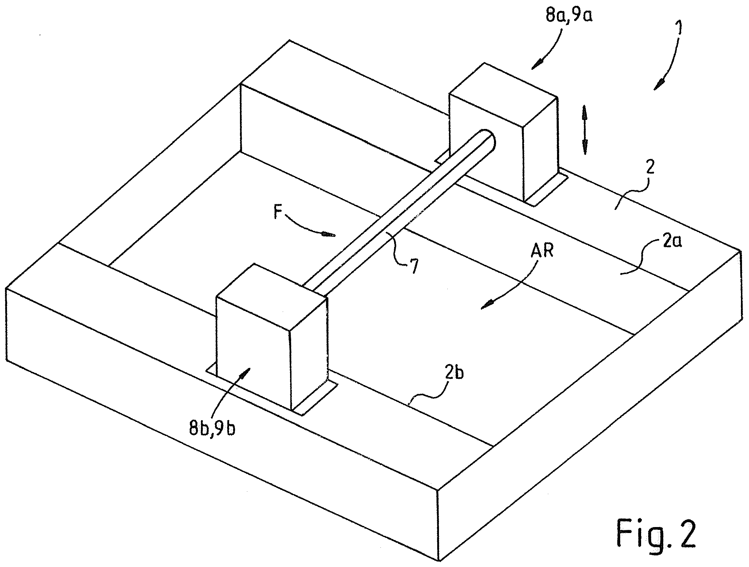

In der in der Figur 2 gezeigten zweiten Ausführungsvariante ist ein Stab 7 von den Armen 9a, 9b der Führungsmittel 8a, 8b in vertikaler Richtung linear zwischen einer Freigabestellung und einer nicht dargestellten Klemmstellung verfahrbar.

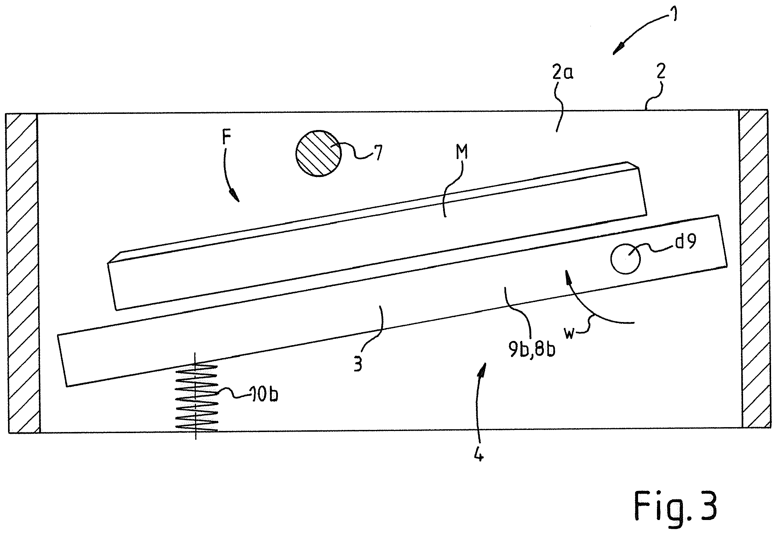

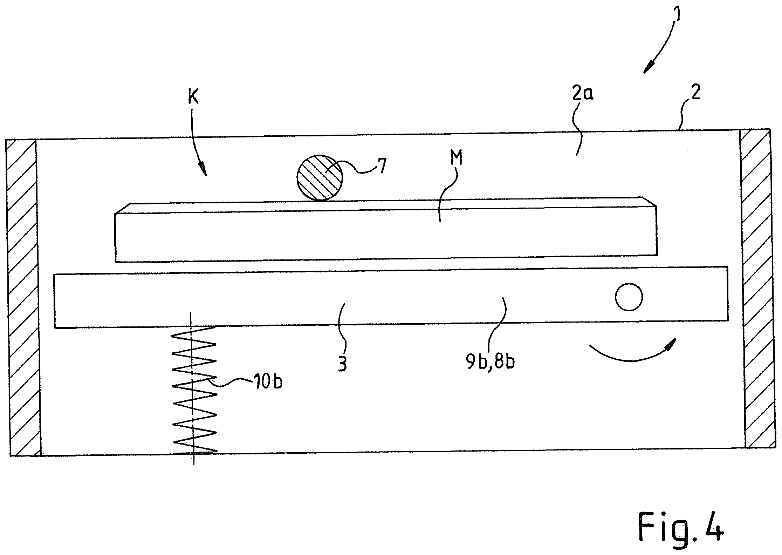

In den Figuren 3 und 4 ist eine dritte Ausführungsvariante einer Mobiltelefonhaltevorrichtung 1 in geschnittenen Seitenansichten gezeigt, wobei die Figur 3 die Mobiltelefonhaltevorrichtung 1 in der Freigabestellung F zeigt, in welcher ein Mobiltelefon M in die dargestellte Position einschiebbar ist, ohne dass ein Stab 7, welcher zwischen gegenüberliegenden Wänden 2a des Hohlkörpers 2 angeordnet ist, das Einschieben oder Herausnehmen des Mobiltelefons M behindert. Der Boden 3 der Mobiltelefonhaltevorrichtung 1 ist an Armen 9b schwenkbar um eine Drehachse d9 gelagert, wobei die Arme 9b die Führungsmittel 8b einer Klemmeinrichtung 4. Druckmittel 10b beaufschlagen den Boden 3 in eine Drehrichtung w, wobei der Boden 3 in der Freigabestellung F durch nicht dargestellte Rastmittel gehalten wird. Nach einem Lösen der Rastmittel bewegt sich der Boden 3 mit dem auf ihm liegenden Mobiltelefon M in die Drehrichtung w und erreicht eine in der Figur 4 gezeigte Klemmstellung K. In dieser Klemmstellung K drückt der Boden 3 das Mobiltelefon M gegen den Stab 7, so dass dieses in der Mobiltelefonhaltevorrichtung 1 sicher gehalten ist. Die Mobiltelefonhaltevorrichtung 1 kann durch eine Druckausübung auf ein Display MD des Mobiltelefons M wieder in die in der Figur 3 gezeigte Freigabestellung F bewegt werden, wobei der Boden 3 bei entsprechender Druckausübung durch die Rastmittel wieder in der Freigabestellung gehalten wird, so dass das Mobiltelefon M entnommen werden kann.

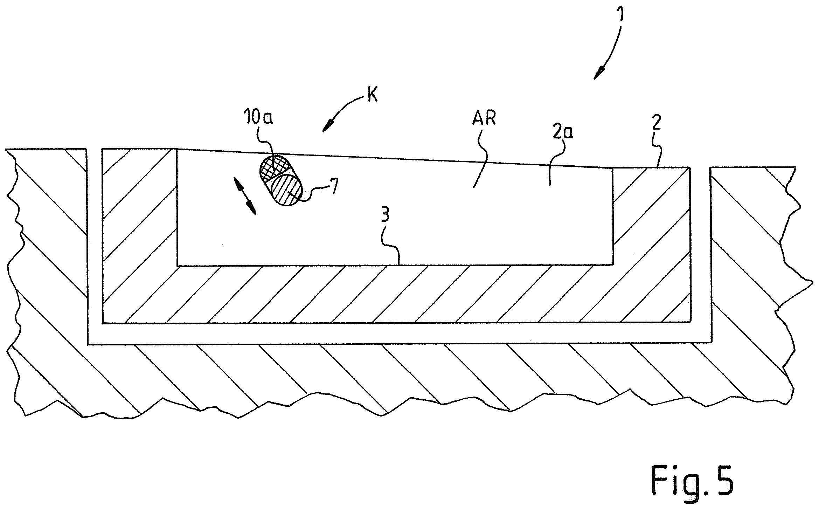

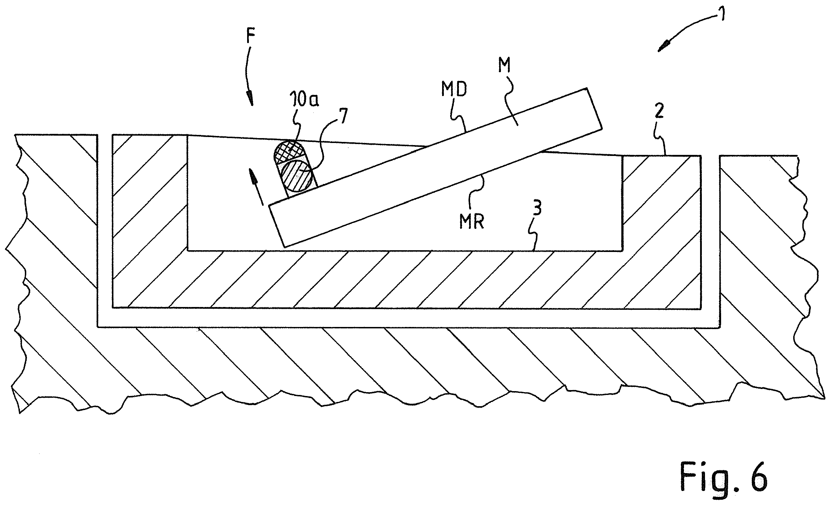

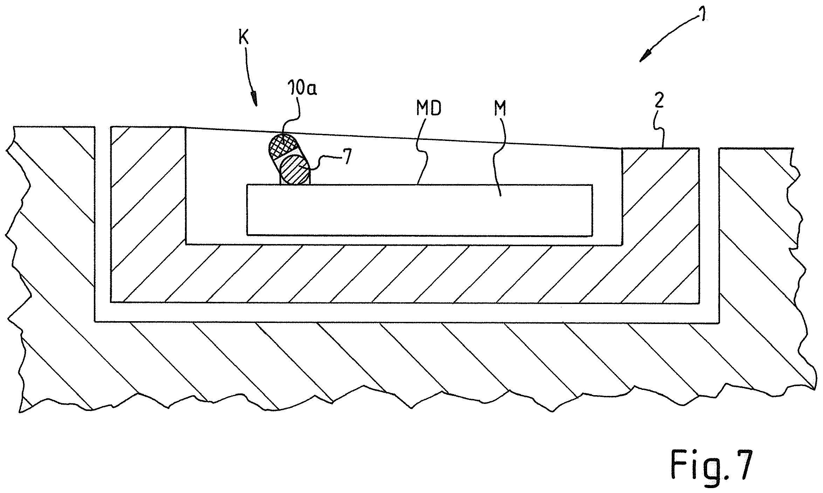

Ein in der Figur 5 gezeigter Stab 7 ist in den Wänden 2a des Hohlkörpers 2 in Bahnen B1 geführt und wird von als elastische Körper ausgebildeten Druckmitteln 10a in eine Klemmstellung K gedrückt. In den Figuren 6 und 7 ist gezeigt wie ein Mobiltelefon M in einen Aufnahmeraum AR der Mobiltelefonhaltevorrichtung 1 eingeschoben wird und hierbei das Druckmittel 10a verformt wird um aus der Klemmstellung K beim Einschieben in eine Freigabestellung F auszuweichen (siehe Figur 6) und dann den Stab wieder in die Klemmstellung K zu drücken, wenn dass Mobiltelefon mit seinem dem Display MD gegenüberliegenden Rücken MR auf dem Boden 3 flächig aufliegt.

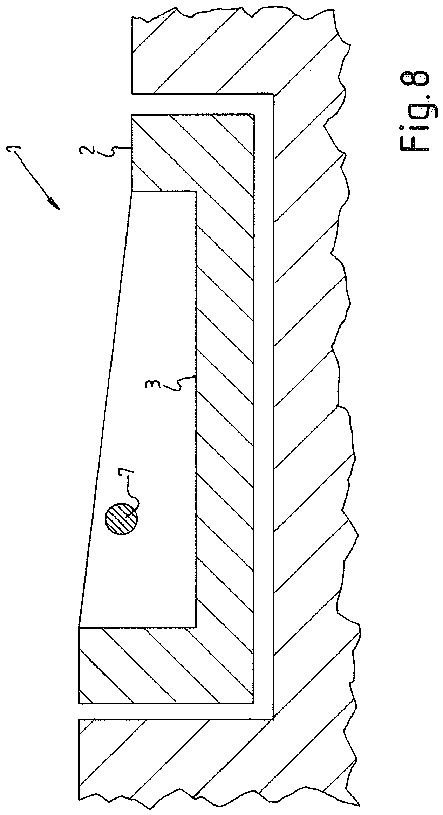

In der Figur 8 ist eine fünfte Variante der Mobiltelefonhaltevorrichtung 1 gezeigt, bei welcher ein Stab 7 als elastischer Stab ausgeführt ist und sich beim Einschieben eines Mobiltelefons elastisch verformt.

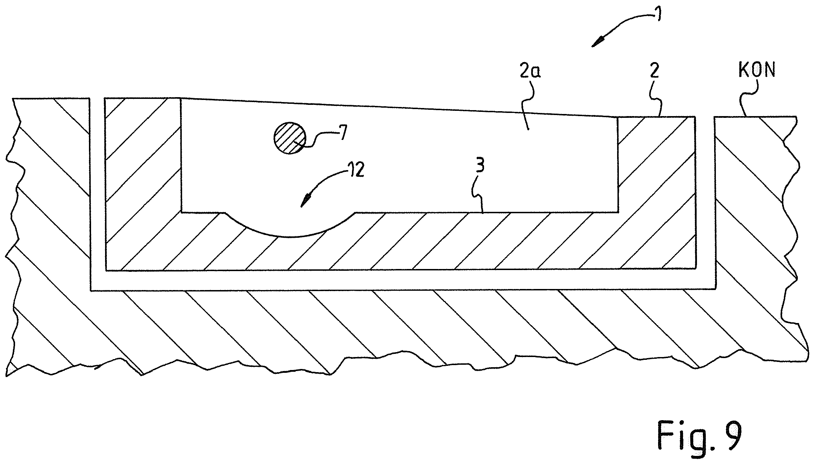

In der Figur 9 ist eine sechste Variante der Mobiltelefonhaltevorrichtung 1 gezeigt, bei welcher ein Stab 7 als elastischer Stab ausgeführt ist und sich beim Einschieben eines Mobiltelefons elastisch verformt. In einem Boden 3 ist eine Mulde 12 ausgebildet, durch welche das Einschieben des Mobiltelefons zwischen den Stab 7 und den Boden 3 erleichtert ist. Wie in den Figuren 3 bis 8 ist die Mobiltelefonhaltevorrichtung 1 in eine Konsole KON eines Fahrzeugs aufgenommen.

### Bezugszeichenliste:

- 1: Mobiltelefonhaltevorrichtung
- 2: Hohlkörper
- 2a, 2b: Wand von 2
- 3: Boden
- 3a: erste Seitenfläche von 3
- 3b: zweiten Seitenfläche von 3
- 4: Klemmeinrichtung
- 5: gegenüberliegenden Seite von 3
- 6: Öffnung in 2
- 7: Stab
- 7a, 7b: erstes, zweites Ende von 7
- 8a, 8b: Führungsmittel
- 9a: erster Arm
- 9b: zweiter Arm
- 10a, 10b: Druckmittel
- 11a, 12b: Rastmittel
- 12: Mulde
- 13: Achse
- 14: Hülse

- AR: Aufnahmeraum
- B1, B2: Bahn
- d9: Drehachse von 9a, 9b
- D1: ersten Abstand zwischen 3 und 7
- D2: zweiten Abstand zwischen 3 und 7
- E: Entriegelungseinrichtung
- F: Freigabestellung von 1
- K: Klemmstellung von 1
- KON: Konsole eines Fahrzeugs
- M: Mobiltelefon
- MD: Display von M
- MR: Rücken von M
- Q2: Querachse von 3
- S1: erste Stellung von 9a/9b
- S2: zweite Stellung von 9a/9b
- SE: Spiegelebene
- w: Drehrichtung

## Patentansprüche

1. Mobiltelefonhaltevorrichtung (1) umfassend einen Hohlkörper (2), einen Boden (3) und eine Klemmeinrichtung (4),
- wobei auf dem Boden (3) ein Mobiltelefon (M) ablegbar ist,
- wobei der Hohlkörper (2) wenigstens zwei gegenüberliegende Wände (2a, 2b) umfasst und an einer dem Boden (3) gegenüberliegenden Seite (5) eine Öffnung (6) umfasst,
- wobei die Mobiltelefonhaltevorrichtung (1) einen Stab (7) umfasst,
- wobei sich der Stab (7) von der ersten Wand (2a) zu der zweiten Wand (2b) des Hohlkörpers (2) erstreckt,
- wobei der Stab (7) derart gelagert oder ausgebildet ist, dass dieser aus einer Freigabestellung (F), in welcher der Stab (7) und der Boden (3) einen ersten Abstand (D1) zueinander aufweisen, in eine Klemmstellung (K), in welcher der Stab (7) und der Boden (3) einen zweiten Abstand (D2) zueinander aufweisen, und umgekehrt verlagerbar ist, wobei der erste Abstand (D1) größer als der zweite Abstand (D2) ist,
- wobei die Klemmeinrichtung (4) zwei Führungsmittel (8a, 8b) umfasst,
- wobei die Führungsmittel (8a, 8b) seitlich des Bodens (3) und seitlich der Öffnung (6) angeordnet sind,
- wobei der Stab (7) oder der Boden (3) von den Führungsmitteln (8a, 8b) geführt ist
**dadurch gekennzeichnet,**
- **dass** der Stab aus einem durchsichtigen oder transparenten Material ausgebildet ist, derart, dass ein Display des Mobiltelefons (M) auch in einem Bereich ablesbar ist, welcher durch den Stab (7) verdeckt ist, wenn das Mobiltelefon (M) in der Mobiltelefonhaltevorrichtung (1) geklemmt ist.

2. Mobiltelefonhaltevorrichtung nach Anspruch 1, **dadurch gekennzeichnet, dass** die Führungsmittel (8a, 8b) einen ersten Arm (9a) und einen zweiten Arm (9b) umfassen, wobei
- **entweder** der erste Arm (9a) mit einem ersten Ende (7a) des Stabes (7) verbunden ist und der zweite Arm (9b) mit einem zweiten Ende (7b) des Stabes (7) verbunden ist
- **oder** der erste Arm (9a) mit einer ersten Seitenfläche (3a) des Bodens (3) und der zweite Arm (9b) mit einer zweiten Seitenfläche (3b) des Bodens (3) verbunden ist.

3. Mobiltelefonhaltevorrichtung nach Anspruch 2, **dadurch gekennzeichnet, dass**
- **entweder** der Stab (7) durch eine synchrone und lineare Bewegung der Arme (9a, 9b) zwischen der Freigabestellung (F) und der Klemmstellung (K) linear geführt ist
- **oder** dass der Stab (7) durch eine synchrone Schwenkbewegung der Arme (9a, 9b) zwischen der Freigabestellung (F) und der Klemmstellung (K) auf einer bogenförmigen Bahn geführt ist,
- wobei der Boden (3) ortsfest angeordnet ist und sich der Stab (7) relativ zu dem Boden (3) bewegt und wobei der Hohlkörper (2) insbesondere ortsfest angeordnet ist und der Boden (3) insbesondere ein Bestandteil des Hohlkörpers (2) ist.

4. Mobiltelefonhaltevorrichtung nach Anspruch 2, **dadurch gekennzeichnet, dass**
- **entweder** der Boden (3) durch eine synchrone und lineare Bewegung der Arme (9a, 9b) zwischen der Freigabestellung (F) und der Klemmstellung (K) linear geführt ist
- **oder** dass der Boden (3) durch eine synchrone Schwenkbewegung der Arme (9a, 9b) zwischen der Freigabestellung (F) und der Klemmstellung (K) auf einer bogenförmigen Bahn geführt ist,
- wobei der Stab (7) ortsfest angeordnet ist und sich der Boden (3) relativ zu dem Stab (7) bewegt und wobei der Hohlkörper (2) insbesondere ortsfest angeordnet ist und der Stab (7) insbesondere ein Bestandteil des Hohlkörpers (2) ist.

5. Mobiltelefonhaltevorrichtung nach wenigstens einem der Ansprüche 1 bis 4, **dadurch gekennzeichnet, dass** die Klemmeinrichtung (4) neben den Führungsmitteln (8a, 8b) auch Druckmittel (10a, 10b) umfasst, wobei die Druckmittel (10a, 10b) derart ausgebildet sind, dass die Arme (9a, 9b) durch eine Federkraft der Druckmittel (10a, 10b) in eine erste Stellung (S1) gedrückt werden, in welcher der Stab (7) oder der Boden (3) in der Freigabestellung (F) steht, und die Druckmittel (10a, 10b) insbesondere Rastmittel (11a, 11b) umfassen, welche derart ausgebildet sind, dass die Arme (9a, 9b) in einer zweiten Stellung (S2), in welcher der Stab (7) oder der Boden (3) in der Klemmstellung (K) steht, gegen die Federkraft der Druckmittel (10a, 10b) arretierbar sind, wobei die Arretierung der zweiten Stellung (S2) durch eine Betätigung einer Entriegelungseinichtung (E) lösbar ist, so dass sich die Arme (9a, 9b) nach dem Lösen motorgetrieben oder federgetrieben in ihre erste Stellung (S1) bewegen.

6. Mobiltelefonhaltevorrichtung nach wenigstens einem der Ansprüche 2 bis 4, **dadurch gekennzeichnet, dass** die Klemmeinrichtung (K) neben den Führungsmitteln (8a, 8b) auch Druckmittel (10a, 10b) umfasst, wobei die Druckmittel (10a, 10b) derart ausgebildet sind, dass die Arme (9a, 9b) durch eine Federkraft der Druckmittel (10a, 10b) in eine zweite Stellung (S2) gedrückt werden, in welcher der Stab (7) oder der Boden (3) in der Klemmstellung (K) steht, und die Druckmittel (10a, 10b) insbesondere Rastmittel (11a, 11b) umfassen, welche derart ausgebildet sind, dass die Arme (9a, 9b) in einer ersten Stellung (S1), in welcher der Stab (7) oder der Boden (3) in der Klemmstellung (K) steht, gegen die Federkraft der Druckmittel (10a, 10b), in welcher der Stab (7) oder der Boden (3) in der Freigabestellung (F) steht, arretierbar sind, wobei die Arretierung der ersten Stellung (S1) durch eine Betätigung einer Entriegelungseinrichtung (E) lösbar ist, so dass sich die Arme (9a, 9b) nach dem Lösen motorgetrieben oder federgetrieben in ihre zweite Stellung (S2) bewegen.

7. Mobiltelefonhaltevorrichtung nach wenigstens einem der vorhergehenden Ansprüche, **dadurch gekennzeichnet, dass** der Stab (7) und/oder der Boden (3) zwischen der Freigabestellung (F) und der Klemmstellung (K) in Führungsmitteln (8a, 8b) geführt ist, wobei die Führungsmittel (8a, 8b) Bahnen (B1, B2) umfassen, wobei die Bahnen (B1, B2) insbesondere zu wenigstens 80% ihrer Länge insbesondere einen linearen oder insbesondere einen bogenförmigen Verlauf aufweisen.

8. Mobiltelefonhaltevorrichtung nach einem der vorhergehenden Ansprüche, **dadurch gekennzeichnet, dass** die Klemmeinrichtung (K) neben den Führungsmitteln (8a, 8b) auch Druckmittel (10a, 10b) umfasst und dass der Stab (7) und/oder der Boden (3) durch eine Federkraft der Druckmittel (10a, 10b) derart beaufschlagt sind, dass dieser bzw. diese entweder in die Klemmstellung (K) oder in die Freigabestellung (F) gedrückt werden.

9. Mobiltelefonhaltevorrichtung nach einem der vorhergehenden Ansprüche, **dadurch gekennzeichnet, dass** der erste Arm (9a) durch die erste Wand (2a) des Hohlkörpers (2) und dass der zweite Arm (9b) durch die zweite Wand (2b) des Hohlkörpers (2) gebildet ist.

10. Mobiltelefonhaltevorrichtung nach Anspruch 1, **dadurch gekennzeichnet,**
- **dass** der Stab (7) und/oder der Boden (3) an den Wänden (2a, 2b) des Hohlkörpers (2) durch die Druckmittel derart elastisch gelagert ist, dass der Stab (7) und/oder der Boden (3) unter Krafteinwirkung aus der Klemmstellung (K) durch eine Verschiebung in die Freigabestellung (F) bewegbar ist, in welcher das Mobiltelefon (M) einschiebbar ist und/oder
- **dass** der Stab (7) und/oder der Boden (3) an den Wänden (2a, 2b) des Hohlkörpers (2) gelagert ist und selbst derart elastisch ausgebildet ist, dass der Stab (7) und/oder der Boden (3) unter Krafteinwirkung aus der Klemmstellung (K) durch eine elastische Verformung in die Freigabestellung (F) bewegbar ist, in welcher das Mobiltelefon (M) einschiebbar ist.

11. Mobiltelefonhaltevorrichtung nach einem der vorhergehenden Ansprüche, **dadurch gekennzeichnet, dass** der Boden (3) eine Mulde (12) umfasst, wobei die Mulde (12) gegenüber dem Stab (7) angeordnet ist und wobei die Mulde (12) derart ausgebildet ist, dass das Mobiltelefon (M) bei in der Spannstellung (S) stehendem Stab (7) mit Spiel zwischen den Stab (7) und den Boden (3) einführbar ist.

12. Mobiltelefonhaltevorrichtung nach einem der vorhergehenden Ansprüche, **dadurch gekennzeichnet, dass** der Stab (7) und/oder der Boden (3) beim Einführen und/oder beim Herausziehen des Mobiltelefons (M) aus dem Mobiltelefonhaltevorrichtung (1) durch das Mobiltelefon (M) in die Freigabestellung (F) bewegbar ist.

13. Mobiltelefonhaltevorrichtung nach einem der vorhergehenden Ansprüche, **dadurch gekennzeichnet, dass** der Stab (7) eine Achse (13) und eine Hülse (14) umfasst, wobei die Hülse (14) insbesondere um die Achse (13) drehbar ist und/oder wobei die Hülse (14) insbesondere elastisch verformbar ist.

14. Mobiltelefonhaltevorrichtung nach einem der vorhergehenden Ansprüche, **dadurch gekennzeichnet, dass** der Stab (7) parallel zu einer Querachse (Q2) des Bodens (3) ausgerichtet ist.

## Claims

1. A mobile telephone holding device (1) comprising a hollow body (2), a base (3) and a clamping device (4),
- wherein a mobile telephone (M) can be placed on the base (3),
- wherein the hollow body (2) comprises at least two opposite walls (2a, 2b) and comprises an opening (6) on one side (5) opposite the base (3),
- wherein the mobile telephone holding device (1) comprises a bar (7),
- wherein the bar (7) extends from the first wall (2a) to the second wall (2b) of the hollow body (2),
- wherein the bar (7) is mounted or designed such that the latter can be shifted from a release position (F), in which the bar (7) and the base (3) have a first distance (D1) to each other, into a clamping position (K), in which the bar (7) and the base (3) have a second distance (D2) to each other, and vice versa, wherein the first distance (D1) is greater than the second distance (D2),
- wherein the clamping device (4) comprises two guide means (8a, 8b),
- wherein the guide means (8a, 8b) are arranged at the side of the base (3) and at the side of the opening (6),
- wherein the bar (7) or the base (3) is guided by the guide means (8a, 8b) **characterized in**
- **that** the bar is formed from a translucent or transparent material, such that a display of the mobile telephone (M) is also easy to read in an area, which is covered by the bar (7), if the mobile telephone (M) is clamped in the mobile telephone holding device (1).

2. A mobile telephone holding device according to Claim 1, **characterized in that** the guide means (8a, 8b) comprise a first arm (9a) and a second arm (9b), wherein
- **either** the first arm (9a) is connected with a first end (7a) of the bar (7) and the second arm (9b) is connected with a second end (7b) of the bar (7)
- **or** the first arm (9a) is connected with a first lateral surface (3a) of the base (3) and the second arm (9b) is connected with a second lateral surface (3b) of the base (3).

3. A mobile telephone holding device according to Claim 1, **characterized in that**
- **either** the bar (7) is guided linearly by a synchronous and linear movement of the arms (9a, 9b) between the release position (F) and the clamping position (K)
- **or** that the bar (7) is guided by a synchronous pivoting movement of the arms (9a, 9b) between the release position (F) and the clamping position (K) on an arch-shaped track,
- wherein the base (3) is arranged in a stationary manner and the bar (7) moves relative to the base (3) and wherein the hollow body (2) is arranged in particular in a stationary manner and the base (3) is in particular a component of the hollow body (2).

4. A mobile telephone holding device according to Claim 2, **characterized in that**
- **either** the base (3) is guided linearly by a synchronous and linear movement of the arms (9a, 9b) between the release position (F) and the clamping position (K)
- **or** that the base (3) is guided by a synchronous pivoting movement of the arms (9a, 9b) between the release position (F) and the lamping position (K) on an arch-shaped track,
- wherein the bar (7) is arranged in a stationary manner and the base (3) moves relative to the bar (7) and wherein the hollow body (2) is arranged in particular in a stationary manner and the bar (7) is in particular a component of the hollow body (2).

5. A mobile telephone holding device according to at least one of Claims 1 to 4, **characterized in that** the clamping device (4) in addition to the guide means (8a, 8b) also comprises means of pressure (10a, 10b), wherein the means of pressure (10a, 10b) are designed such that the arms (9a, 9b) are pressed by a spring force of the means of pressure (10a, 10b) into a first position (S1), in which the bar (7) or the base (3) is in the release position, and the means of pressure (10a, 10b) comprise in particular catch means (11 a, 11 b), which are designed such that the arms (9a, 9b) in a second position (S2), in which the bar (7) or the base (3) is in the clamping position (K), are lockable against the spring force of the means of pressure (10a, 10b), wherein the locking of the second position (S2) is releasable by an actuation of an unlocking device (E), so that the arms (9a, 9b) move after the release motor-driven or spring-driven into their first position (S1).

6. A mobile telephone holding device according to at least one of Claims 2 to 4, **characterized in that** the clamping device (K) in addition to the guide means (8a, 8b) also comprises means of pressure (10a, 10b), wherein the means of pressure (10a, 10b) are designed such that the arms (9a, 9b) are pressed by a spring force of the means of pressure (10a, 10b) into a second position (S2), in which the bar (7) or the base (3) is in the clamping position (K), and the means of pressure (10a, 10b) comprise in particular catch means (11 a, 11 b), which are designed such that the arms (9a, 9b) in a first position (S1), in which the bar (7) or the base (3) is in the clamping position (K), are lockable against the spring force of the means of pressure (10a, 10b), in which the bar (7) or the base (3) is in the release position (F), wherein the locking of the first position (S1) is releasable by an actuation of the unlocking device (E), so that the arms (9a, 9b) move after the release motor-driven or spring-driven into their second position (S2).

7. A mobile telephone holding device according to at least one of the preceding claims **characterized in that** the bar (7) and/or the base (3) is guided between the release position (F) and the clamping position (K) in guide means (8a, 8b), wherein the guide means (8a, 8b) comprise tracks (B1, B2), wherein the tracks (B1, B2) have in particular a linear or in particular an arch-shaped course over at least 80% of their length.

8. A mobile telephone holding device according to one of the preceding claims, **characterized in that** the clamping device (K) in addition to the guide means (8a, 8b) also comprises means of pressure (10a, 10b) and that the bar (7) and/or the base (3) are subjected to a spring force of the means of pressure (10a, 10b) such that this or these are pressed either into the clamping position (K) or into the release position (F).

9. A mobile telephone holding device according to one of the preceding claims, **characterized in that** the first arm (9a) is formed by the first wall (2a) of the hollow body (2) and that the second arm (9b) is formed by the second wall (2b) of the hollow body (2).

10. A mobile telephone holding device according to Claim 1, **characterized in**
- **that** the bar (7) and/or the base (3) is mounted elastically on the walls (2a, 2b) of the hollow body (2) by the means of pressure such that the bar (7) and/or the base (3) under the impact of the force is movable from the clamping position (K) through a displacement into the release position (F), in which the mobile telephone (M) can be inserted and/or
- **that** the bar (7) and/or the base (3) is mounted on the walls (2a, 2b) of the hollow body (2) and is itself designed elastically such that the bar (7) and/or the base (3) under the impact of the force is movable from the clamping position (K) through an elastic deformation into the release position (F), in which the mobile telephone (M) can be inserted.

11. A mobile telephone holding device according to one of the preceding claims, **characterized in that** the base (3) comprises a trough (12), wherein the trough (12) is arranged opposite the bar (7) and wherein the trough (12) is designed such that the mobile telephone (M) can be inserted with clearance between the bar (7) and the base (3) when the bar (7) is in the clamping position (S).

12. A mobile telephone holding device according to one of the preceding claims, **characterized in that** the bar (7) and/or the base (3) is movable from the mobile telephone holding device by the mobile telephone (M) into the release position (F) when the mobile telephone (M) is being inserted and/or extracted.

13. A mobile telephone holding device according to one of the preceding claims, **characterized in that** the bar (7) comprises an axis (13) and a sleeve (14), wherein the sleeve (14) is rotatable in particular about the axis (13) and/or wherein the sleeve (14) in particular is elastically deformable.

14. A mobile telephone holding device according to one of the preceding claims, **characterized in that** the bar (7) is oriented parallel to a transverse axis (Q2) of the base (3).

## Revendications

1. Dispositif de support de téléphone mobile (1) comprenant un corps creux (2), un fond (3) et un dispositif de verrouillage (4),
- un téléphone mobile (M) pouvant être posé sur le fond (3),
- le corps creux (2) comprenant au moins deux parois opposées (2a, 2b) et comprenant une ouverture (6) au niveau du côté (5) opposé au fond (3),
- le dispositif de support de téléphone mobile (1) comprenant une tige (7),
- la tige (7) s'étendant de la première paroi (2a) à la deuxième paroi (2b) du corps creux (2),
- la tige (7) étant logée ou conçue de façon à ce que celle-ci puisse être déplacée, à partir d'une position déverrouillée (F), dans laquelle la tige (7) et le fond (3) présentent une première distance (D1) entre eux, vers une position de verrouillage (K), dans laquelle la tige (7) et le fond (3) présentent une deuxième distance (D2) entre eux et inversement, la première distance (D1) étant supérieure à la deuxième distance (D2),
- le dispositif de verrouillage (4) comprenant deux moyens de guidage (8a, 8b),
- les moyens de guidage (8a, 8b) étant disposés sur le côté du fond (3) et sur le côté de l'ouverture (6),
- la tige (7) ou le fond (3) étant guidé par les moyens de guidage (8a, 8b), **caractérisé en ce que**
- la tige est constituée d'un matériau transparent de façon à ce qu'un affichage du téléphone mobile (M) puisse être lu même dans une zone qui est recouverte par la tige (7) lorsque le téléphone mobile (M) est coincé dans le dispositif de support de téléphone mobile (1).

2. Dispositif de support de téléphone mobile selon la revendication 1, **caractérisé en ce que** les moyens de guidage (8a, 8b) comprennent un premier bras (9a) et un deuxième bras (9b), moyennant quoi :
- soit le premier bras (9a) est relié avec une première extrémité (7a) de la tige (7) et le deuxième bras (9b) est relié avec une deuxième extrémité (7b) de la tige (7),
- soit le premier bras (9a) est relié avec une première surface latérale (3a) du fond (3) et le deuxième bras (9b) est relié avec une deuxième surface latérale (3b) du fond (3).

3. Dispositif de support de téléphone mobile selon la revendication 2, **caractérisé en ce que**
- soit la tige (7) est guidée linéairement par un mouvement synchrone et linéaire des bras (9a, 9b) entre la position de déverrouillage (F) et la position de verrouillage (K),
- soit la tige (7) est guidée sur une piste en forme d'arc par un mouvement de pivotement synchrone des bras (9a, 9b) entre la position de déverrouillage (F) et la position de verrouillage (K),
- le fond (3) étant disposé de manière stationnaire et la tige (7) se déplaçant par rapport au fond (3) et le corps creux (2) étant plus particulièrement disposé de manière stationnaire et le fond (3) faisant plus particulièrement partie du corps creux (2).

4. Dispositif de support de téléphone mobile selon la revendication 2, **caractérisé en ce que**
- soit le fond (3) est guidé linéairement par un mouvement synchrone et linéaire des bras (9a, 9b) entre la position de déverrouillage (F) et la position de verrouillage (K),
- soit le fond (3) est guidé sur une piste en forme d'arc par un mouvement de pivotement synchrone des bras (9a, 9b) entre la position de déverrouillage (F) et la position de verrouillage (K),
- la tige (7) étant disposée de manière stationnaire et le fond (3) se déplaçant par rapport à la tige (7) et le corps creux (2) étant plus particulièrement disposé de manière stationnaire et la tige (7) faisant plus particulièrement partie du corps creux (2).

5. Dispositif de support de téléphone mobile selon au moins l'une des revendications 1 à 4, **caractérisé en ce que** le dispositif de verrouillage (4) comprend, en plus des moyens de guidage (8a, 8b), également des moyens de pression (10a, 10b), les moyens de pression (10a, 10b) étant conçus de façon à ce que les bras (9a, 9b) soient comprimés par une force élastique des moyens de pression (10a, 10b) vers une première position (S1), dans laquelle la tige (7) ou le fond (3) se trouve dans la position de déverrouillage (F) et les moyens de pression (10a, 10b) comprennent plus particulièrement des moyens d'encliquetage (11 a, 11 b) qui sont conçus de façon à ce que les bras (9a, 9b) puissent être bloqués, contre la force élastique des moyens de pression (10a, 10b), dans une deuxième position, dans laquelle la tige (7) ou le fond (3) se trouve dans la position de verrouillage (K), le blocage de la deuxième position (S2) pouvant être détaché par l'actionnement d'un dispositif de déverrouillage (E) de façon à ce que les bras (9a, 9b) se déplacent, après le détachement, de manière motorisée ou entraînée par des ressorts, vers leur première position (S1).

6. Dispositif de support de téléphone mobile selon au moins l'une des revendications 2 à 4, **caractérisé en ce que** le dispositif de verrouillage (K) comprend, en plus des moyens de guidage (8a, 8b), également des moyens de pression (10a, 10b), les moyens de pression (10a, 10b) étant conçus de façon à ce que les bras (9a, 9b) soient comprimés par une force élastique des moyens de pression (10a, 10b) vers une deuxième position (S2), dans laquelle la tige (7) ou le fond (3) se trouve dans la position de verrouillage (K) et les moyens de pression (10a, 10b) comprennent plus particulièrement des moyens d'encliquetage (11 a, 11 b) qui sont conçus de façon à ce que les bras (9a, 9b) puissent être bloqués, contre la force élastique des moyens de pression (10a, 10b), dans une première position (S1), dans laquelle la tige (7) ou le fond (3) se trouve dans la position de déverrouillage (F), le blocage de la première position (S1) pouvant être détaché par l'actionnement d'un dispositif de déverrouillage (E) de façon à ce que les bras (9a, 9b) se déplacent, après le détachement, de manière motorisée ou entraînée par des ressorts, vers leur deuxième position (S2).

7. Dispositif de support de téléphone mobile selon au moins l'une des revendications précédentes, **caractérisé en ce que** la tige (7) et/ou le fond (3) est guidé entre la position de déverrouillage (F) et la position de verrouillage (K) dans des moyens de guidage (8a, 8b), les moyens de guidage (8a, 8b) comprenant des pistes (B1, B2), les pistes (B1, B2) présentant, sur au moins 80 % de leur longueur, plus particulièrement une extension linéaire ou plus particulièrement une extension en forme d'arc.

8. Dispositif de support de téléphone mobile selon au moins l'une des revendications précédentes, **caractérisé en ce que** le dispositif de verrouillage (K) comprend, en plus des moyens de guidage (8a, 8b), également des moyens de pression (10a, 10b) et **en ce que** la tige (7) et/ou le fond (3) peuvent être sollicités par une force élastique des moyens de pression (10a, 10b) de façon à c que celui-ci ou ceux-ci soit comprimés soit dans la position de verrouillage (K) soit dans la position de déverrouillage (F).

9. Dispositif de support de téléphone mobile selon au moins l'une des revendications précédentes, **caractérisé en ce que** le premier bras (9a) est constitué de la première paroi (2a) du corps creux (2) et **en ce que** le deuxième bras (9b) est constitué de la deuxième paroi (2b) du corps creux (2).

10. Dispositif de support de téléphone mobile selon la revendication 1, **caractérisé en ce que**
- la tige (7) et/ou le fond (3) sont logés de manière élastique au niveau des parois (2a, 2b) du corps creux (2) par les moyens de pression de façon à ce que la tige (7) et/ou le fond (3) puisse être déplacé, par l'application d'une force, de la position de verrouillage (K), par un décalage, vers la position de déverrouillage (F), dans laquelle le téléphone mobile (M) peut être inséré et/ou
- la tige (7) et/ou le fond (3) est logé au niveau des parois (2a, 2b) du corps creux (2) et est conçu lui-même de manière élastique de façon à ce que la tige (7) et/ou le fond (3) puisse être déplacé, par l'application d'une force, grâce à une déformation élastique, de la position de verrouillage (K) vers une position de déverrouillage (F), dans laquelle le téléphone mobile (M) peut être inséré.

11. Dispositif de support de téléphone mobile selon l'une des revendications précédentes, **caractérisé en ce que** le fond (3) comprend un creux (12), le creux (12) étant disposé par rapport à la tige (7) et le creux (12) étant conçu de façon à ce que le téléphone mobile (M) puisse être introduit avec un jeu entre la tige (7) et le fond (3), lorsque la tige (7) est dans la position de serrage (S).

12. Dispositif de support de téléphone mobile selon l'une des revendications précédentes, **caractérisé en ce que** la tige (7) et/ou le fond (3) peut être déplacé, lors de l'insertion et/ou de l'extraction du téléphone mobile (M) hors du dispositif de support de téléphone mobile (1) par le téléphone mobile (M) vers la position de déverrouillage (F).

13. Dispositif de support de téléphone mobile selon l'une des revendications précédentes, **caractérisé en ce que** la tige (7) comprend un axe (13) et un manchon (14), le manchon (14) pouvant tourner plus particulièrement autour de l'axe (13) et/ou le manchon (14) étant plus particulièrement déformable élastiquement.

14. Dispositif de support de téléphone mobile selon l'une des revendications précédentes, **caractérisé en ce que** la tige (7) est orientée parallèlement à un axe transversal (Q2) du fond (3).
